# EUROPEAN PATENT APPLICATION

(11) **EP 3 812 884 A1**
(43) Date of publication of application: **28.04.2021**
(21) Application number: 19910182.5
(22) Date of filing: 23.10.2019
(51) Int. Cl.: G06F 8/34, G07C 5/08

(54) **INFORMATION PRESENTATION METHOD AND APPARATUS**

(30) Priority: 16.01.2019 CN 201910041445
(71) Applicant: Beijing Baidu Netcom Science and Technology Co., Ltd., Beijing 100085 (CN)
(72) Inventor: TAO, Ran, Beijing 100085 (CN); LIU, Yuting, Beijing 100085 (CN)
(74) Representative: Lucke, Andreas
(86) International application number: PCT/CN2019/112780
(87) International publication number: WO 2020/147363

(57) **Abstract**

Disclosed are an information presentation method and apparatus. The method comprises: acquiring driving data of a vehicle (201); and presenting driving process associated information of the vehicle to a user by using a visualization tool (202), wherein the visualization tool is constructed based on an information generation interface, and the information generation interface is capable of generating, based on the driving data of the vehicle, an information item, corresponding to the information generation interface, in the driving process associated information. An information generation interface capable of generating information related to a driving process of a vehicle is pre-constructed, and the pre-constructed information generation interface is provided for a user, such as a test engineer, who desires to view the information related to the driving process of the vehicle, such that the user can develop, by using the information generation interface, a visualization tool capable of presenting the information that is associated with the driving process of the vehicle and that the user desires to view, thereby reducing the development difficulty of the visualization tool, and reducing the development cost of the visualization tool.

## Description

### CROSS-REFERENCE TO RELATED APPLICATION

This patent application claims priority to Chinese patent Application No. 201910041445.7, filed on January 16, 2019, entitled "Information Presentation Method and Apparatus," the entire disclosure of which is hereby incorporated by reference.

### TECHNICAL FIELD

The present disclosure relates to the field of vehicle, specifically to the field of vehicle testing, and more specifically to a method and apparatus for presenting information.

### BACKGROUND

The visualization of information of a vehicle associated with a driving process such as a vehicle speed and a driving trajectory during the driving process, that is, presenting the information associated with the driving process to a user (e.g., an engineer debugging the vehicle) is the basis for evaluating the performances of the vehicle in various aspects.

At present, it is required to respectively develop, according to each type of information associated with the driving process that is customized by the user and required to be presented, a visualization tool such as a control that may present the information associated with the driving process, for the each type of information associated with the driving process, resulting in a difficult development and high development costs.

### SUMMARY

The present disclosure provides a method and apparatus for presenting information.

In a first aspect, an embodiment of the present disclosure provides a method for presenting information, the method including: acquiring driving data of a vehicle; and presenting driving process associated information of the vehicle to a user by using a visualization tool, the visualization tool being constructed based on an information generation interface, and the information generation interface being capable of generating an information item, corresponding to the information generation interface, in the driving process associated information, based on the driving data of the vehicle.

In a second aspect, an embodiment of the present disclosure provides an apparatus for presenting information, the apparatus including: an acquiring unit, configured to acquire driving data of a vehicle; and a presenting unit, configured to present driving process associated information of the vehicle to a user by using a visualization tool, the visualization tool being capable of generating an information item, corresponding to the information generation interface, in the driving process associated information, based on the driving data of the vehicle.

According to the method and apparatus for presenting information provided in the present disclosure, the driving data of the vehicle is acquired; and the driving process associated information of the vehicle is presented to the user by using the visualization tool. Here, the visualization tool is constructed based on the information generation interface, and the information generation interface may generate the information item in the driving process associated information that corresponds to the information generation interface, based on the driving data of the vehicle. Accordingly, it is implemented that the information generation interface that may generate the information associated with the driving process of the vehicle is pre-constructed, and that the pre-constructed information generation interface is provided for a user such as a test engineer who desires to view the information associated with the driving process of the vehicle, such that the user may develop, by using the information generation interface, the visualization tool that may present the information associated with the driving process of the vehicle that the user desires to view, thereby reducing the development difficulty of the visualization tool, and reducing the development costs of the visualization tool.

### BRIEF DESCRIPTION OF THE DRAWINGS

After reading detailed descriptions for non-limiting embodiments given with reference to the following accompanying drawings, other features, objectives and advantages of the present disclosure will be more apparent.
Fig. 1 illustrates an example system architecture adapted to implement embodiments of the present disclosure;
Fig. 2 is a flowchart of a method for presenting information according to an embodiment of the present disclosure;
Fig. 3 is a flowchart of the method for presenting information according to another embodiment of the present disclosure;
Fig. 4 is a schematic structural diagram of an apparatus for presenting information according to an embodiment of the present disclosure; and
Fig. 5 is a schematic structural diagram of a computer system of a terminal and a server adapted to implement embodiments of the present disclosure.

### DETAILED DESCRIPTION OF EMBODIMENTS

Embodiments of present disclosure will be described below in detail with reference to the accompanying drawings. It should be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should also be noted that some embodiments in the present disclosure and some features in the disclosure may be combined with each other on a non-conflict basis. Features of the present disclosure will be described below in detail with reference to the accompanying drawings and in combination with embodiments.

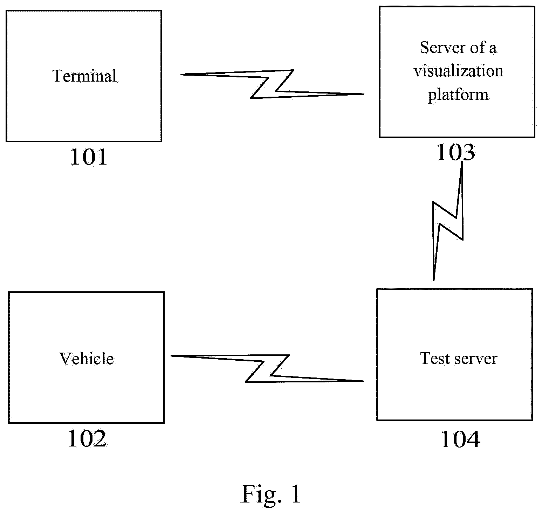

Fig. 1 illustrates an example system architecture adapted to implement embodiments of the present disclosure.

As shown in Fig. 1, the system architecture may include a terminal 101, a vehicle 102, a server 103 of a visualization platform, and a test server 104.

Each person using the visualization platform (e.g., an engineer debugging the vehicle) may be referred to as a user. The terminal 101 is a terminal used by the user. The vehicle 102 may be an autonomous driving vehicle having an autonomous driving capability.

The user may send a login request to the server 103 of the visualization platform through the terminal 101. After the server 103 of the visualization platform passes a verification for the identity of the user, the user logs in to the visualization platform.

When being tested, the vehicle 102 generates driving data during driving. The vehicle 102 may send the driving data generated in the vehicle 102 to the test server 104 for storage.

The driving data of the vehicle 102 may include, but not limited to, a vehicle speed, a vehicle position, and an attribute of a detected driving environment object. The driving environment object may include, but not limited to, a building and an obstacle. The attribute of the driving environment object may include, but not limited to, a type, a position, etc.

The server 103 of the visualization platform may store a plurality of information generation interfaces, and each information generation interface may generate an information item of a corresponding type in driving associated information based on the driving data of the vehicle. The server 103 of the visualization platform may pre-store a plurality of developed visualization tools. The visualization tools are constructed based on the information generation interfaces, and the visualization tools, when running, generate the information item of the corresponding type in the driving associated information by invoking the information generation interfaces. The server 103 may acquire, from the test server 104, the driving data of the vehicle 102 generated in the vehicle 102 during the testing for the vehicle 102.

When the user desires to view driving process associated information of the vehicle 102, the driving process associated information of the vehicle 102 may be generated by a visualization tool that may present the driving process associated information that the user selects and desires to view, based on the driving data of vehicle 102 generated in the vehicle 102 during the testing for the vehicle 102 and acquired from the test server 104. The driving process associated information may refer to an animation.

The user may pre-register an account on the visualization platform, and may bind a visualization tool developed by another user and used by the user and a visualization tool developed by the user to the account registered by the user on the visualization platform. After the user logs in to the visualization platform using the registered account, the visualization tool developed by the another user and used by the user and the visualization tool developed by the user may be presented to the user in a visualization management interface.

The user may download, through the terminal 101, the visualization tool that may present the driving process associated information that the user desires to view. The driving process associated information of the vehicle 102 is locally generated using the downloaded visualization tool, and the driving process associated information of the vehicle 102 that is generated by the visualization tool is presented to the user in a presentation interface on the terminal 101. The user may also send a control request for the visualization tool on the server 103 of the visualization platform to the server 103 of the visualization platform through the terminal 101. The driving process associated information of the vehicle 102 is generated on the server 103 of the visualization platform by the visualization tool, and the generated driving process associated information of the vehicle 102 is sent by the server 103 of the visualization platform to the terminal 101. Then, the driving process associated information of the vehicle 102 that is generated by the visualization tool is presented to the user in the presentation interface on the terminal 101.

The presentation interface on the terminal 101 contains a control button for controlling the presentation process of the driving process associated information of the vehicle, and the user of the terminal 101 may perform a corresponding click operation in the presentation interface to control the presentation process of the driving process associated information of the vehicle.

It should be understood that the terminal 101, the vehicle 102, the server 103 of the visualization platform and the test server 104 in Fig. 1 are merely examples, and the terminal 101 maybe a terminal used by a user (e.g., an engineer debugging a vehicle) of any vehicle manufacturer cooperating with the visualization platform. The vehicle 102 may be any vehicle manufactured by any vehicle manufacturer cooperating with the visualization platform. The test server 104 may be a server storing driving data generated by a vehicle of any vehicle manufacturer cooperating with the visualization platform during testing for the vehicle. The driving data generated by the vehicle of each vehicle manufacturer during the respective testing for the vehicle is stored in the respective test server.

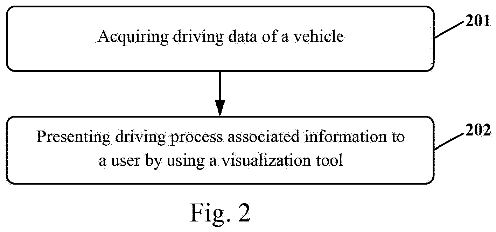

Referring to Fig. 2, Fig. 2 illustrates a flow of a method for presenting information according to an embodiment of the present disclosure. The method includes the following steps.

Step 201, acquiring driving data of a vehicle.

In this embodiment, the driving data of the vehicle may refer to driving data generated during testing for the vehicle. In order to generate driving process associated information of the vehicle, the driving data of the vehicle may be first acquired.

In this embodiment, the driving process associated information includes a plurality of information items associated with a driving process.

For example, the driving process associated information includes a plurality of information items such as driving parameter information and attribute information of a driving environment object, and the driving parameter information may further include a plurality of information items such as vehicle speed information and vehicle head angle information.

Step 202, presenting driving process associated information to a user by using a visualization tool.

In this embodiment, an API (Application Programming Interface) that may generate the information items in the driving process associated information of the vehicle may be referred to as an information generation interface.

In this embodiment, a visualization tool that may present the driving process associated information of the vehicle to the user who desires to view the driving process associated information of the vehicle is constructed based on the information generation interface. The visualization tool that may present the driving process associated information of the vehicle to the user may be a control that may present the driving process associated information of the vehicle to the user.

In this embodiment, a plurality of information generation interfaces may be pre-constructed. Each information generation interface may generate an information item of one type, respectively. The number of information generation interfaces that may generate the information item of the one type may be more than one. An information item generated through one information generation interface may be referred to as an information item corresponding to the information generation interface. In the driving process of the vehicle, the driving data of the vehicle collected at each moment may be used for generating one piece of driving process associated information of the vehicle.

For example, the driving process associated information includes vehicle speed information. The vehicle speed information may refer to a pattern indicating a vehicle speed of the vehicle in the driving process. When an information generation interface that may generate the vehicle speed information is invoked, the pattern indicating the vehicle speed of the vehicle in the driving process may be generated based on vehicle speed data in the driving data of the vehicle. Each piece of vehicle speed data may be used for generating a pattern indicating a vehicle speed of the vehicle in the driving process.

In this embodiment, the plurality of pre-constructed information generation interfaces may be provided for a user developing the visualization tool, and the user developing the visualization tool develops the visualization tool based on the information generation interfaces. When developing a visualization tool, the user developing the visualization tool only needs to write, according to an information item required to be presented by the visualization tool, a code invoking an information generation interface that may generate the information item required to be presented. Accordingly, the visualization tool developed by the user developing the visualization tool contains the code invoking the information generation interface that may generate the information item required to be presented. When the visualization tool developed by the user developing the visualization tool runs, each information generation interface in the visualization tool is invoked to generate the information item corresponding to the information generation interface, respectively. Each generated information item has a presentation moment. Each presentation moment may respectively correspond to a collection moment of data on which the generation of the information item in the driving process of the vehicle is based. For example, a starting moment at which the driving process associated information of the vehicle is presented to the user may correspond to the starting moment of the driving process of the vehicle, and the presentation moment of each information item after the starting moment of the presentation may respectively correspond to the collection moment of the data on which the generation of the information item is based. The time difference between the presentation moment of an information item and the starting moment at which the driving process associated information of the vehicle is presented to the user is identical to the time difference between the collection moment of the data on which the generation of the information item is based and the starting moment of the driving process of the vehicle.

In this embodiment, a presentation interface for presenting an information item may be provided for the user developing the visualization tool, and the user developing the visualization tool only needs to write a statement invoking the presentation interface. Accordingly, the visualization tool developed by the user developing the visualization tool contains the statement invoking the presentation interface. When the visualization tool runs, the presentation interface is invoked, and may present, on the presentation interface of the terminal of the user who desires to view the driving process associated information of the vehicle, an information item to the user who desires to view the driving process associated information of the vehicle, according to the presentation moment of the information item.

In this embodiment, the driving data of the vehicle on which the generation of the driving process associated information of the vehicle performed by the information generation interface is based may refer to driving data of a preset format. After the driving data of the vehicle is acquired, the acquired driving data of the vehicle may be first converted into the preset format, and the driving data of the preset format may be used as input data of the information generation interface. Accordingly, for data of a given type in the driving data, the formats of the driving data of this type recorded by control systems of vehicles of a plurality of different manufacturers are different. Through the conversion into the preset format, the vehicles of the different manufacturers may use a given information generation interface corresponding to this type, to generate the information item in the driving process associated information that corresponds to the given information generation interface.

For example, for the data of the vehicle speed type, each piece of vehicle speed data recorded by the control system of a vehicle of a manufacturer contains a type identifier of the vehicle speed type, and a vehicle speed. Since the format of the vehicle speed data recorded by the control system of the vehicle of the manufacturer is pre-stored, after the vehicle speed data of the vehicle sent by the vehicle is received, the vehicle speed data may be analyzed according to the pre-recorded format to obtain the vehicle speed of the vehicle, and then converted into the vehicle speed data of the preset format.

In this embodiment, when the user desires to view the driving process associated information of the vehicle, the driving process associated information of the vehicle that the user desires to view may be presented to the user on the presentation interface by using the visualization tool that may present the driving process associated information of the vehicle that the user desires to view. A code of the visualization tool that may present the driving process associated information of the vehicle that the user desires to view contains a code invoking an information generation interface that may generate an information item in the driving process associated information of the vehicle that the user desires to view.

For example, the driving process associated information of the vehicle that the user desires to view includes the vehicle speed information, the vehicle head angle information, and distance information between a position of the vehicle and a center between lane lines. The code of the visualization tool that may present the driving process associated information of the vehicle that the user desires to view includes a statement invoking an information generation interface that may generate the vehicle speed information, a statement invoking an information generation interface that may generate the vehicle head angle information, and a statement invoking an information generation interface that may generate the distance information between the position of the vehicle and the center between the lane lines. When the visualization tool that may present the driving process associated information of the vehicle that the user desires to view runs, the information generation interface that may generate the vehicle speed information is invoked, the information generation interface that may generate the vehicle head angle information is invoked, and the information generation interface that may generate the distance information between the position of the vehicle and the center between the lane lines is invoked.

The vehicle speed information may refer to the pattern indicating the vehicle speed of the vehicle in the driving process. When the information generation interface that may generate the vehicle speed information is invoked, the pattern indicating the vehicle speed may be generated based on the vehicle speed data in the driving data of the vehicle. The vehicle head angle information may refer to a pattern indicating a vehicle head angle of the vehicle in the driving process. When the information generation interface that may generate the vehicle head angle information is invoked, the pattern indicating the vehicle head angle of the vehicle in the driving process may be generated based on the driving data of the vehicle. The distance information between the position of the vehicle and the center between the lane lines may refer to a pattern indicating the distance between the position of the vehicle and the center between the lane lines in the driving process of the vehicle. When the information generation interface that may generate the distance information between the position of the vehicle and the center between the lane lines is invoked, the pattern indicating the distance between the position of the vehicle in the driving process of the vehicle and the center between the lane lines may be generated based on the driving data of the vehicle.

In this embodiment, the presentation interface on the terminal of the user who desires to view the driving process associated information of the vehicle contains a control button for controlling the presentation process of the driving process associated information of the vehicle, and the user who desires to view the driving process associated information of the vehicle may perform an operation in the presentation interface to control the presentation process of the driving process associated information of the vehicle.

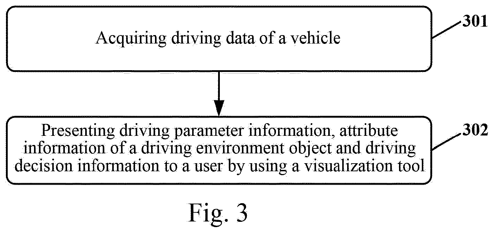

Referring to Fig. 3, Fig. 3 illustrates a flow of the method for presenting information according to another embodiment of the present disclosure. The method includes the following steps.

Step 301, acquiring driving data of a vehicle.

In this embodiment, the driving data of the vehicle may refer to driving data generated during testing for the vehicle. In order to generate driving process associated information of the vehicle, the driving data of the vehicle may be first acquired.

In this embodiment, the driving process associated information may include driving parameter information of the vehicle, driving environment object information, and driving decision information. The driving parameter information of the vehicle may include vehicle speed information, vehicle head angle information, and distance information between a position of the vehicle and a center between lane lines. Attribute information of a driving environment object may refer to a pattern indicating a type of a driving environment object (e.g., a building or an obstacle) appearing in the driving process of the vehicle. The driving decision information of the vehicle may refer to a pattern indicating a driving decision made by the vehicle in the driving process.

Step 302, presenting driving parameter information, attribute information of a driving environment object and driving decision information to a user by using a visualization tool.

In this embodiment, when the user desires to view the driving process associated information of the vehicle, the driving process associated information of the vehicle that the user desires to view may be presented to the user on a presentation interface by using a visualization tool that may present the driving process associated information of the vehicle that the user desires to view. A code of the visualization tool that may present the driving process associated information of the vehicle that the user desires to view contains a code invoking an information generation interface that may generate an information item in the driving process associated information of the vehicle that the user desires to view.

For example, the driving process associated information of the vehicle that the user desires to view includes information items such as the vehicle speed information, the attribute information of the driving environment object and the driving decision information of the vehicle. The code of the visualization tool that may present the driving process associated information of the vehicle that the user desires to view contains a statement invoking an information generation interface that may generate an information item in the driving process associated information.

When the visualization tool that may present the driving process associated information of the vehicle that the user desires to view runs, an information generation interface that may generate the vehicle speed information is invoked, an information generation interface that may generate the attribute information of the driving environment object is invoked, and an information generation interface that may generate the driving decision information of the vehicle is invoked. The vehicle speed information may refer to a pattern indicating a vehicle speed of the vehicle in the driving process. When the information generation interface that may generate the vehicle speed information is invoked, the pattern indicating the vehicle speed of the vehicle in the driving process may be generated. The attribute information of the driving environment object may refer to the pattern indicating the type of the driving environment object appearing in the driving process of the vehicle. When the information generation interface that may generate the attribute information of the driving environment object is invoked, the pattern indicating the type of the driving environment object appearing in the driving process of the vehicle may be generated based on the driving data of the vehicle. The driving decision information of the vehicle may refer to the pattern indicating the driving decision made by the vehicle in the driving process. When the information generation interface that may generate the driving decision information of the vehicle is invoked, the pattern indicating the driving decision made by the vehicle in the driving process may be generated based on the driving data of the vehicle.

In this embodiment, in the driving process of the vehicle, the driving data of the vehicle collected at each moment may be used for generating one piece of driving process associated information of the vehicle. Each information item in the generated driving process associated information has a presentation moment. Each presentation moment may respectively correspond to a collection moment of data on which the generation of the information item in the driving process of the vehicle is based. For example, a starting moment at which the driving process associated information of the vehicle is presented to the user may correspond to the starting moment of the driving process of the vehicle, and the presentation moment of each information item after the starting moment of the presentation may respectively correspond to the collection moment of the data on which the generation of the information item is based. The time difference between the presentation moment of an information item and the starting moment at which the driving process associated information of the vehicle is presented to the user is identical to the time difference between the collection moment of the data on which the generation of the information item is based and the starting moment of the driving process of the vehicle.

In this embodiment, a presentation interface for presenting an information item may be provided for a user developing a visualization tool, and the user developing the visualization tool only needs to write a statement invoking the presentation interface. Accordingly, the visualization tool developed by the user developing the visualization tool contains the statement invoking the presentation interface. When the visualization tool runs, the presentation interface is invoked, and may present, on the presentation interface of the terminal of the user who desires to view the driving process associated information of the vehicle, an information item to the user who desires to view the driving process associated information of the vehicle, according to the presentation moment of the information item.

In this embodiment, the user who desires to view the driving process associated information of the vehicle may input a configuration instruction for an attribute of an information item in driving associated information of the vehicle, to configure an attribute (e.g., size and color) of each information item in the driving associated information of the vehicle. When the driving associated information is presented to the user who desires to view the driving process associated information of the vehicle, an information item having a configured size and a configured color is presented to the user who desires to view the driving process associated information of the vehicle.

For example, the vehicle speed information refers to the pattern indicating the vehicle speed of the vehicle in the driving process. The driving decision information may refer to the pattern indicating the driving decision made by the vehicle in the driving process. The user may input a configuration instruction to configure the size and the color of the pattern indicating the vehicle speed of the vehicle in the driving process. The user may input a configuration instruction to configure the size and the color of the pattern indicating the driving decision made by the vehicle in the driving process. When presenting the pattern indicating the vehicle speed of the vehicle in the driving process to the user who desires to view the driving process associated information of the vehicle, the pattern indicating the vehicle speed of the vehicle in the driving process and having the configured size and the configured color may be presented to the user who desires to view the driving process associated information of the vehicle. When presenting the pattern indicating the driving decision made by the vehicle in the driving process to the user who desires to view the driving process associated information of the vehicle, the pattern indicating the driving decision made by the vehicle in the driving process and having the configured size and the configured color may be presented to the user who desires to view the driving process associated information of the vehicle.

In this embodiment, the names of a plurality of visualization tools and the function introduction information of each of the plurality of visualization tools may be presented to the user who desires to view the driving process associated information of the vehicle, on the presentation interface of the terminal of the user who desires to view the driving process associated information of the vehicle. According to the driving process associated information that the user desires to view, the user who desires to view the driving process associated information of the vehicle may select, from the plurality of visualization tools, a visualization tool that may present the driving process associated information of the vehicle that the user who desires to view the driving process associated information of the vehicle desires to view.

In this embodiment, each user may develop a visualization tool according to the development standard of a visualization tool of a visualization platform. At the same time, the each user may publish, on the visualization platform, the format of driving data on which the generation of the driving process information item performed by the visualization tool developed by the user is based. The user developing the visualization tool may share the developed visualization tool to other users. The user developing the visualization tool may send a sharing instruction to a server of the visualization platform through the terminal of the user, and the server of the visualization platform may provide the visualization tool developed by the user developing the visualization tool to the other users in response to receiving the sharing instruction indicating the visualization tool developed by the user developing the visualization tool.

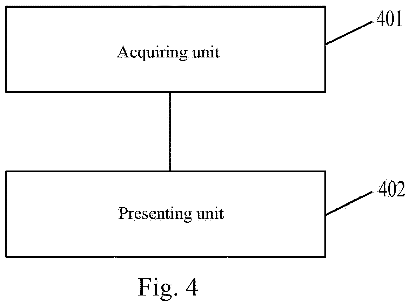

Referring to Fig. 4, as an implementation of the method shown in the above drawings, an embodiment of the present disclosure provides an apparatus for presenting information. The embodiment of the apparatus corresponds to the embodiment of the method shown in Fig. 2.

As shown in Fig. 4, the apparatus for presenting information in this embodiment includes: an acquiring unit 401 and a presenting unit 402. Here, the acquiring unit 401 is configured to acquire driving data of a vehicle. The presenting unit 402 is configured to present driving process associated information of the vehicle to a user by using a visualization tool. Here, the visualization tool is constructed based on an information generation interface, and the information generation interface may generate an information item in the driving process associated information that corresponds to the information generation interface, based on the driving data of the vehicle.

In some alternative implementations of this embodiment, the driving process associated information of the vehicle includes driving parameter information, attribute information of a driving environment object, and driving decision information.

In some alternative implementations of this embodiment, the apparatus for presenting information further includes: a configuring unit, configured to receive a configuration instruction for configuring an attribute of an information item in the driving process associated information of the vehicle, the configuration instruction being generated based on a configuration operation performed by the user; and configure the attribute of the information item in the driving process associated information of the vehicle.

In some alternative implementations of this embodiment, the apparatus for presenting information further includes: a selecting unit, configured to, before the driving data of the vehicle is acquired, present a plurality of visualization tools to the user; receive a visualization tool selection instruction inputted by the user, and determine a visualization tool selected by the user; and use the visualization tool selected by the user as the visualization tool for presenting the driving process associated information of the vehicle.

In some alternative implementations of this embodiment, the apparatus for presenting information further includes: a sharing unit, configured to provide, in response to receiving a sharing instruction indicating that the visualization tool developed by the user is to be provided to another user, the visualization tool developed by the user to the another user.

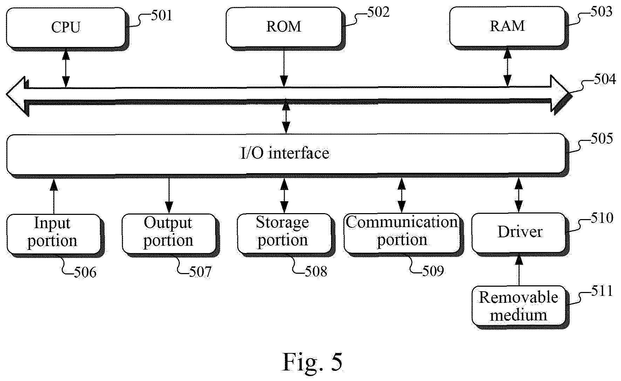

Fig. 5 is a schematic structural diagram of a computer system of a terminal and a server adapted to implement embodiments of the present disclosure.

As shown in Fig. 5, the computer system includes a central processing unit (CPU) 501, which may execute various appropriate actions and processes in accordance with a program stored in a read-only memory (ROM) 502 or a program loaded into a random access memory (RAM) 503 from a storage portion 508. The RAM 503 also stores various programs and data required by operations of the computer system. The CPU 501, the ROM 502 and the RAM 503 are connected to each other through a bus 504. An input/output (I/O) interface 505 is also connected to the bus 504.

Generally, the following parts are connected to the I/O interface 505: an input portion 506; an output portion 507; the storage portion 508 including a hard disk, etc.; and a communication portion 509 including a network interface card such as a LAN card and a modem. The communication portion 509 performs communication processing via a network such as the Internet. A driver 510 is also connected to the I/O interface 505 as required. A removable medium 511 such as a magnetic disk, an optical disk, a magneto-optical disk and a semiconductor memory is installed on the driver 510, to facilitate the retrieval of a computer program from the removable medium 511, and the installation thereof on the storage portion 508 as required.

In particular, the process described in embodiments of the present disclosure may be implemented as a computer program. For example, an embodiment of the present disclosure includes a computer program product, including a computer program hosted on a computer readable medium, the computer program including instructions for performing the method as illustrated in the flowchart. The computer program may be downloaded and installed from a network via the communication portion 509, and/or may be installed from the removable medium 511. The computer program, when executed by the central processing unit (CPU) 501, performs the above functions defined in the method of the present disclosure.

The present disclosure further provides an electronic device that may be configured with one or more processors and a memory for storing one or more programs. The one or more programs may contain instructions for performing the operations described in above embodiments. The one or more programs, when executed by the one or more processors, cause the one or more processors to execute instructions for the operations described in above embodiments.

The present disclosure further provides a computer readable medium. The computer readable medium may be a computer readable medium included in the above electronic device, or a stand-alone computer readable medium not assembled into the electronic device. The above computer readable medium carries one or more programs. The one or more programs, when executed by the electronic device, cause the electronic device to perform the operations described in the above embodiments.

It should be noted that the computer readable medium according to some embodiments of the present disclosure may be a computer readable signal medium or a computer readable medium or any combination of the above two. An example of the computer readable medium may include, but is not limited to: electric, magnetic, optical, electromagnetic, infrared, or semiconductor systems, apparatuses, elements, or a combination of any of the above. A more specific example of the computer readable medium may include, but is not limited to: electrical connection with one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical memory, a magnetic memory, or any suitable combination of the above. In some embodiments of the present disclosure, the computer readable medium maybe any tangible medium containing or storing programs, which may be used by, or used in combination with, a command execution system, apparatus or element. In some embodiments of the present disclosure, the computer readable signal medium may include a data signal in the base band or propagating as a part of a carrier wave, in which computer readable program codes are carried. The propagating data signal may take various forms, including but not limited to an electromagnetic signal, an optical signal, or any suitable combination of the above. The computer readable signal medium may also be any computer readable medium except for the computer readable medium. The computer readable medium is capable of transmitting, propagating or transferring programs for use by, or used in combination with, a command execution system, apparatus or element. The program codes contained on the computer readable medium may be transmitted with any suitable medium, including but not limited to: wireless, wired, optical cable, RF medium, etc., or any suitable combination of the above.

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion including one or more executable instructions for implementing specified logical functions. It should be further noted that, in some alternative implementations, the functions denoted by the blocks may also occur in a sequence different from the sequences shown in the figures. For example, any two blocks presented in succession may be executed substantially in parallel, or they may sometimes be executed in a reverse sequence, depending on the functions involved. It should be further noted that each block in the block diagrams and/or flow charts as well as a combination of blocks in the block diagrams and/or flow charts may be implemented using a dedicated hardware-based system executing specified functions or operations, or by a combination of dedicated hardware and computer messages.

The above description only provides an explanation of embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the present disclosure. Technical schemes formed by the above-described features being interchanged with, but not limited to, technical features with similar functions disclosed in the present disclosure are examples.

## Claims

1. A method for presenting information, comprising:
acquiring driving data of a vehicle; and
presenting driving process associated information of the vehicle to a user by using a visualization tool, the visualization tool being constructed based on an information generation interface, and the information generation interface being capable of generating an information item, corresponding to the information generation interface, in the driving process associated information, based on the driving data of the vehicle.

2. The method according to claim 1, wherein the driving process associated information of the vehicle comprises driving parameter information, attribute information of a driving environment object, and driving decision information.

3. The method according to claim 2, further comprising:
receiving a configuration instruction for configuring an attribute of the information item in the driving process associated information of the vehicle, the configuration instruction being generated based on a configuration operation performed by the user; and
configuring the attribute of the information item in the driving process associated information of the vehicle.

4. The method according to any one of claims 1-3, wherein before the acquiring driving data of the vehicle, the method further comprises:
presenting a plurality of visualization tools to the user;
receiving a visualization tool selection instruction inputted by the user, and determining a visualization tool selected by the user; and
using the visualization tool selected by the user as the visualization tool for presenting the driving process associated information of the vehicle.

5. The method according to claim 4, further comprising:
providing, in response to receiving a sharing instruction indicating that the visualization tool developed by the user is to be provided to another user, the visualization tool developed by the user to the another user.

6. An apparatus for presenting information, comprising:
an acquiring unit, configured to acquire driving data of a vehicle; and
a presenting unit, configured to present driving process associated information of the vehicle to a user by using a visualization tool, the visualization tool being capable of generating an information item, corresponding to the information generation interface, in the driving process associated information, based on the driving data of the vehicle.

7. The apparatus according to claim 6, wherein the driving process associated information of the vehicle comprises driving parameter information, attribute information of a driving environment object, and driving decision information.

8. The apparatus according to claim 7, further comprising:
a configuring unit, configured to receive a configuration instruction for configuring an attribute of the information item in the driving process associated information of the vehicle, the configuration instruction being generated based on a configuration operation performed by the user; and configure the attribute of the information item in the driving process associated information of the vehicle.

9. The apparatus according to any one of claims 6-8, further comprising:
a selecting unit, configured to, before the driving data of the vehicle is acquired, present a plurality of visualization tools to the user; receive a visualization tool selection instruction inputted by the user, and determine a visualization tool selected by the user; and use the visualization tool selected by the user as the visualization tool for presenting the driving process associated information of the vehicle.

10. The apparatus according to claim 9, further comprising:
a sharing unit, configured to provide, in response to receiving a sharing instruction indicating that the visualization tool developed by the user is to be provided to another user, the visualization tool developed by the user to the another user.

11. An electronic device, comprising:
one or more processors; and
a memory, storing one or more programs,
the one or more programs, when executed by the one or more processors, causing the one or more processors to implement the method according to any one of claims 1-5.

12. A computer readable storage medium, storing a computer program, the program, when executed by a processor, implementing the method according to any one of claims 1-5.
